# EUROPÄISCHE PATENTSCHRIFT

(11) **EP 1 653 265 B1**
(45) Veröffentlichungstag und Bekanntmachung des Hinweises auf die Patenterteilung: **14.01.2015**
(21) Anmeldenummer: 04090411.2
(22) Anmeldetag: 27.10.2004
(51) Int. Cl.: G02B 6/42

(54) **Anordnung zur optischen Kopplung eines Lichtwellenleiters mit einer optischen Einheit eines optischen Moduls sowie Koppelelement für eine solche Anordnung**
Arrangement for optical coupling of a waveguide with an optical unit of an optical module and coupling element for such an arrangement
Dispositif de couplage optique d'un guide d'onde avec l'unité optique d'un module optique et élément de couplage pour un tel dispositif

(43) Veröffentlichungstag der Anmeldung: 03.05.2006
(73) Patentinhaber: Avago Technologies General IP (Singapore) Pte. Ltd., Singapore 768923 (SG)
(72) Erfinder: Hurt, Hans, 93049 Regensburg (DE); Althaus, Hans, 93138 Lappendorf (DE); Wittl, Josef, 92331 Parsberg (DE); Prucker, Stephan, 93133 Burglengenfeld (DE); Weberpals, Frank, 93047 Regensburg (DE); Stäber, Tobias, 93057 Regensburg (DE)
(74) Vertreter: Dilg, Haeusler, Schindelmann Patentanwaltsgesellschaft mbH

(56) Entgegenhaltungen:
- US-A- 4 534 616
- US-A- 5 526 455
- US-B1- 6 287 016
- PATENT ABSTRACTS OF JAPAN Bd. 013, Nr. 357 (P-915), 10. August 1989 (1989-08-10) & JP 01 116504 A (SUMITOMO ELECTRIC IND LTD), 9. Mai 1989 (1989-05-09)

## Beschreibung

Die Erfindung betrifft eine Anordnung zur optischen Kopplung eines Lichtwellenleiters mit einer optischen Einheit eines optischen Moduls gemäß dem Oberbegriff des Anspruchs 1 sowie ein Koppelelement für eine solche Anordnung.

Es stellt sich allgemein das Problem, eine optische Einheit wie einen vertikal emittierenden Laser oder eine Fotodiode mit einem Lichtwellenleiter in effektiver Weise zu koppeln. Hierzu ist es bekannt, eine aktive Justage des Lichtwellenleiters in Bezug auf die optische Einheit durchzuführen. Dabei wird der Lichtwellenleiter während des Betriebs der optischen Einheit auf eine maximale ein- oder ausgekoppelte Leistung ausgerichtet und in dieser Position fixiert. Dieser aktive Justagevorgang ist jedoch sehr zeit- und kostenintensiv und dementsprechend für einen Hochvolumeneinsatz nicht geeignet.

Aus der DE 199 09 242 A1 ist ein opto-elektronisches Modul bekannt, bei dem ein Leadframe mit einem opto-elektronischen Wandler in einem Modulgehäuse positioniert und mit einem lichtdurchlässigen, formbaren Material vergossen wird. Eine Lichtein- oder Auskopplung erfolgt über eine Lichtleitfaser, die an einem Stutzen des Modulgehäuses angekoppelt wird. Auf dem Leadframe befindet sich auch der Treiberbaustein bzw. Empfangsbaustein für den opto-elektronischen Wandler.

Die US-B2-6 470 120 beschreibt ein Verfahren und eine Vorrichtung, bei denen sowohl eine optische Komponente als auch ein zugeordneter Lichtwellenleiter jeweils auf einer inneren Hülse angeordnet sind, die in Bezug auf eine in einem äußeren Rahmen fest angeordneten äußere Hülse exzentrisch ausgebildet ist. Die innere Hülse ist dabei jeweils drehbar in einer entsprechenden Bohrung der äußeren Hülse angeordnet. Weiter sind die optische Komponente und der Lichtwellenleiter jeweils exzentrisch in der inneren Hülse angeordnet. Durch Drehen der äußeren und/oder inneren Hülse ist jeweils die Position der optischen Komponente und des Lichtwellenleiters einstellbar und diese können durch geeignetes Drehen der jeweiligen inneren und äußeren Hülsen zueinander positioniert werden.

Aus der DE-A-23 58 785 ist eine justierbare Kopplungsvorrichtung für optische Bauelemente bekannt, bei der eine Lichtleitfaser in einer exzentrischen Bohrung eines Steckerteils angeordnet ist, das in einer ebenfalls exzentrischen Bohrung eines Steckerexzenters angeordnet ist, wobei der Steckerexzenter zentrisch in einer Exzenterführung gelagert ist. Durch eine Überlagerung der Drehbewegungen des Steckerteils und des Steckerexzenters kann die Eintrittsfläche der Lichtleitfaser auf die Position eines optischen Elementes ausgerichtet werden, das optisch mit der Lichtleitfaser zu koppeln ist.

Es ist des weiteren allgemein bekannt, bei der optischen Kopplung zwischen einem optischen Bauelement und einem Lichtwellenleiter eine Koppellinse einzusetzen, die zwischen dem optischen Bauelement und dem Lichtwellenleiter angeordnet wird. Bei der Produktion von optischen Bauelementen mit einer Linse sind dabei mehrere Ausführungsvarianten bekannt. In einer ersten Ausführungsvariante wird die Koppellinse unmittelbar aus dem Material des Gehäuses des optischen Bauelementes gebildet. Beispielsweise wird die Linse an einem transparenten Material ausgebildet, das im Rahmen eines Spritzvorgangs um ein optisches Bauelement zur Bereitstellung eines Packaging gespritzt wird. In einer zweiten Ausführungsvariante wird die Koppellinse dagegen diskret gefertigt und anschließend auf ein optisches Bauelement aufgebracht oder in anderer Weise mit diesem verbunden.

Zur letzteren Ausführungsvariante ist es aus der US 2002/0131728 A1 bekannt, an einem Submount, an dem eine lichtemittierende oder lichtdetektierende optische Einheit angeordnet ist, auch ein optisches Subsystem mit einer exzentrisch angeordneten Linse anzuordnen. Die lichtemittierende oder lichtdetektierende optische Einheit und das optische Subsystem sind dabei an dem gleichen Submount befestigt.

Nachteilig besteht aufgrund von Fertigungstoleranzen in aller Regel jeweils ein Offset zwischen der optischen Achse eines Lichtwellenleiters, in den Licht ein- oder ausgekoppelt werden soll, der Koppellinse und dem Bauelement. Dies reduziert die Qualität der Ein-/Auskopplung von Licht in den/aus dem Lichtwellenleiter.

In dem Dokument JP 01116504 ist ebenfalls eine Anordnung zur Kopplung einer Lichtleitfaser mit einer optischen Einheit beschrieben. Die Lichtleitfaser ist exzentrisch in einer Ferrule angeordnet, die wiederum drehbar in einem Halterungselement gelagert ist. Durch Drehen der Ferrule erfolgt eine Ausrichtung der Lichtleitfaser gegenüber der optischen Einheit.

Der vorliegenden Erfindung liegt die Aufgabe zugrunde, eine Anordnung zur optischen Kopplung eines Lichtwellenleiters mit einer optischen Einheit eines optischen Moduls sowie ein Koppelelement für eine solche Anordnung bereitzustellen, die in einfacher und kostengünstiger Weise ohne die Notwendigkeit einer aktiven Justage die Ausrichtung eines Lichtwellenleiters in Bezug auf eine optische Einheit ermöglichen und die dabei gleichzeitig in effektiver Weise die Integration einer Koppellinse in den Strahlengang zwischen der optischen Einheit und dem Lichtwellenleiter erlauben.

Diese Aufgabe wird erfindungsgemäß durch eine Anordnung mit den Merkmalen des Anspruchs 1 und ein Koppelelement mit den Merkmalen des Anspruchs 11 gelöst. Bevorzugte und vorteilhafte Ausgestaltungen sind in den Unteransprüchen angegeben.

Danach weist das optische Modul eine Referenzgeometrie auf, die genau eine (erste) Symmetrieachse definiert. Zunächst wird ein Versatz zwischen der optischen Achse der optischen Einheit und der Symmetrieachse der Referenzgeometrie bestimmt. Es wird des weiteren ein als Adapter wirkendes Koppelelement bereitgestellt, das der Aufnahme eines in Bezug auf die optische Einheit auszurichtenden Lichtwellenleiters dient und das hierzu eine durch eine Innenfläche begrenzte Bohrung aufweist, wobei die Innenfläche eine (zweite) Symmetrieachse definiert. Das Koppelelementes wird in Bezug auf das optische Modul derart angeordnet, dass die zweite Symmetrieachse mit der optischen Achse der optischen Einheit zusammenfällt, wobei die erste Symmetrieachse und die zweite Symmetrieachse parallel zueinander verlaufen und einen Versatz zueinander aufweisen, der im wesentlichen gleich dem Versatz zwischen der optischen Achse der optischen Einheit und der ersten Symmetrieachse der Referenzgeometrie ist.

Das Koppelelement weist des weiteren erfindungsgemäß an der der optischen Einheit zugewandten Seite ein strahlformendes Element auf, bei dem es sich insbesondere um eine Koppellinse handelt. Die optische Achse des strahlformenden Elements fällt dabei mit der zweiten Symmetrieachse, die durch die durch die Innenfläche begrenzte Bohrung gebildet ist, zusammen. Koppelelement und Linse bilden somit eine Einheit: die Linse ist in das Koppelelement integriert.

Die erfindungsgemäße Lösung beruht auf dem Gedanken, den Versatz zwischen der idealen Position einer optischen Einheit in Bezug auf das optische Modul und der tatsächlichen Position zu bestimmen und zur Kompensation dieses Versatzes ein Koppelelement einzusetzen, das diesen Versatz kompensiert. Gleichzeitig ist in das Koppelelement ein strahlformendes Element integriert, wobei die optische Achse des strahlformendes Elements und Symmetrieachse der Bohrung des Koppelelements - und damit auch die optische Achse des strahlformendes Elements und die optische Achse einer in Bohrung des Koppelelements eingeführten Lichtleitfaser - zusammenfallen.

Da das Koppelelement und das strahlformende Element eine Einheit bilden, kann der Offset zwischen der Bohrung des Koppelelements (die die Führung für eine Lichtleitfaser darstellt) und dem strahlformende Element minimiert werden. Da auch bei einem Verdrehen des Koppelelements der Offset gleich bleibt, kann der verbleibende Offset darüberhinaus besser berücksichtigt werden. Auch können mit Vorteil bei Verwendung einer Koppellinse die Linsengeometrie und der Abstand des Linsenscheitels zur Oberfläche der optischen Einheit auf die jeweiligen Randbedingungen wie z.B. Faserdruchmesser und Art der optischen Einheit abgestimmt werden.

Das strahlformende Element kann einstückig mit dem Koppelelement ausgebildet sein. Beispielsweise ist das Koppelelement mit dem integrierten strahlformenden Element aus einem transparenten Material gefertigt, z.B. als ein Spritzgussteil ausgeführt. Alternativ kann vorgesehen sein, dass das strahlformende Element ein gesondertes, diskretes Teil darstellt, das mit dem Koppelelement verbunden ist.

Bevorzugt weist das Koppelelement eine Außenfläche mit einer weiteren Symmetrieachse auf, die mit der Symmetrieachse der Referenzgeometrie zusammenfällt. Mit anderen Worten ist somit die Aussparung in exzentrischer Weise in dem Koppelelement ausgebildet, wobei der Grad der Exzentrizität gerade derart gewählt ist, dass der Versatz zwischen der optischen Achse der optischen Einheit und der Symmetrieachse der Referenzgeometrie ausgeglichen ist.

In einer bevorzugten Ausgestaltung der Erfindung handelt es sich bei dem Koppelelement um eine längliche Hülse mit einer exzentrischen Bohrung. Die Hülse weist zwei Symmetrieachsen auf. Die eine Symmetrieachse wird durch die Symmetrieachse der Außenkontur bzw. Außenfläche der Hülse definiert, die andere Symmetrieachse durch die Symmetrieachse der Innenkontur bzw. Innenfläche. Es wird nach Feststellen des Versatzes zwischen der optischen Achse der optischen Einheit und der Symmetrieachse der Referenzgeometrie eine Hülse mit einer Ausgestaltung an dem optischen Modul befestigt, bei der der Abstand zwischen den beiden Symmetrieachsen der Hülse gerade dem Versatz zwischen der optischen Achse der optischen Einheit und der Symmetrieachse der Referenzgeometrie entspricht.

Die exzentrischen Bohrung der Hülse erstreckt sich bevorzugt von der einen Seite der Hülse bis zu dem strahlformenden Element. Dieses ist dabei bevorzugt nicht in der Bohrung selbst angeordnet, sondern auf der der optischen Einheit zugewandten Stirnseite der Hülse ausgebildet oder angeordnet.

Zur Feststellung eines Versatzes zwischen der optischen Achse des optischen Elementes und der mechanischen Achse der Referenzgeometrie werden beispielsweise Bilderkennungsverfahren eingesetzt. Hierzu werden beispielsweise die Referenzgeometrie und die aktuelle Position der optischen Einheit mittels einer Kamera erfasst und wird mittels eines Mustererkennungsprogrammes der Versatz der optischen Einheit gegenüber der Referenzgeometrie bestimmt.

Die Referenzgeometrie - die durch die Struktur des Moduls gebildet wird - dient bevorzugt nicht nur als Referenz für die Anordnung der optischen Einheit, sondern auch der mechanischen Ankopplung und Befestigung des Koppelelementes an der optischen Einheit. Sie bildet dabei Führungsstrukturen aus. Eine solche Befestigung ist in einfacher Weise möglich, da die Symmetrieachse der Referenzgeometrie und die durch die äußere Kontur des Koppelelementes definierte Symmetrieachse des Koppelelementes nach der Befestigung bevorzugt identisch sind. Die Symmetrieachse der Bohrung des Koppelelementes ist dagegen hierzu versetzt und in Übereinstimmung mit der optischen Achse der optischen Einheit.

Die Erfindung wird nachfolgend unter Bezugnahme der Figuren der Zeichnung anhand mehrerer Ausführungsbeispiele näher erläutert. Es zeigen:
- Figur 1: schematisch die Anordnung einer optischen Einheit in einem optischen Modul, das eine Referenzgeometrie aufweist;
- Figur 2: die Anordnung einer optischen Einheit in einem optischen Modul mit einer Referenzgeometrie, wobei zusätzlich eine Hülse mit einer zentrischen Bohrung zur Ankopplung eines Lichtwellenleiters vorgesehen ist;
- Figur 3: die Anordnung einer optischen Einheit in einem optischen Modul mit einer Referenzgeometrie, wobei zusätzlich eine Hülse mit einer exzentrisch ausgebildeten Bohrung zur Ankopplung eines Lichtwellenleiters vorgesehen ist;
- Figur 4a: ein erstes Ausführungsbeispiel einer Hülse mit exzentrischer Bohrung;
- Figur 4b: zum Vergleich eine Hülse gemäß Figur 4a mit nicht exzentrischer Bohrung;
- Figur 5a: ein zweites Ausführungsbeispiel einer Hülse mit exzentrischer Bohrung;
- Figur 5b: zum Vergleich eine Hülse gemäß Figur 5a mit nicht exzentrischer Bohrung;
- Figur 6a: ein drittes Ausführungsbeispiel einer Hülse mit exzentrischer Bohrung;

- Figur 6b: zum Vergleich eine Hülse gemäß Figur 6a mit nicht exzentrischer Bohrung und
- Figur 7: ein optoelektronisches Modul mit einem auf einem Leadframe angeordneten Sende- oder Empfangsbauelement.

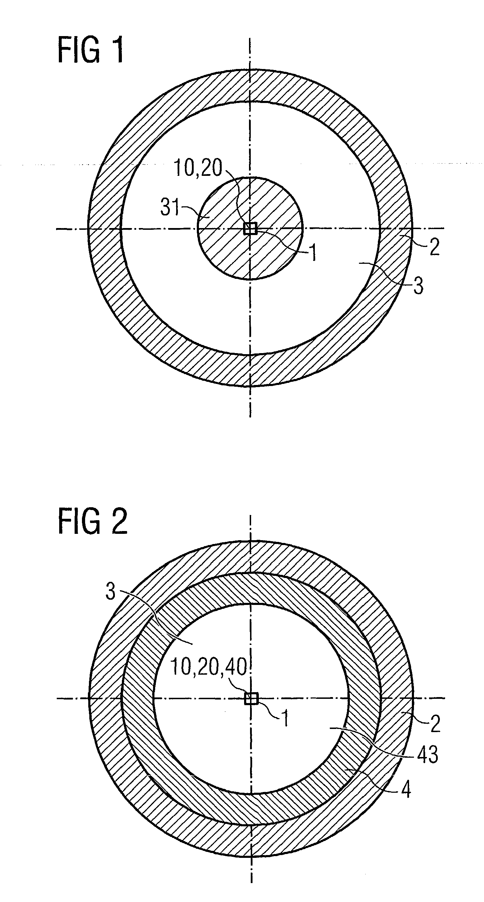

Anhand der Figuren 1 bis 3 wird zunächst das grundlegende Konzept der vorliegenden Erfindung erläutert. Die Figur 1 zeigt in Draufsicht eine optische Einheit 1, die auf einer Referenzfläche 3 eines optischen Moduls (nicht näher dargestellt) angeordnet ist. Bei dem optischen Modul handelt es sich insbesondere um ein optoelektronisches Sendemodul und/oder ein optoelektronisches Empfangsmodul, beispielsweise einen optoelektronischen Transceiver. Die Referenzfläche 3 ist beispielsweise die Oberfläche eines Trägersubstrats, auf dem die optische Einheit 1 in an sich bekannter Weise mechanisch befestigt und elektrisch kontaktiert ist.

Die optische Einheit 1 kann grundsätzlich in beliebiger Weise ausgebildet sein. Bevorzugt handelt es sich um eine Leuchtdiode (LED), eine vertikal emittierende Laserdiode (VCSEL), einen Kantenemitter, eine Fotodiode, einen Spiegel oder eine andere optische Funktionsfläche, über die Licht empfangen oder ausgesandt wird. Die optische Einheit ist bevorzugt als vorgefertigter Chip ausgebildet, der auf der Referenzfläche 3 aufgesetzt wird. Sie wird im Folgenden daher auch als optischer Chip 1 bezeichnet. Der Begriff "optischer Chip" steht also stellvertretend für ein beliebiges lichtemittierendes oder lichtempfangendes optisches Element.

Die optische Einheit 1 weist eine optische Achse 10 auf, die am Schnittpunkt des in Figur 1 gestrichelt dargestellten Koordinatenkreuzes liegt. Entlang der optischen Achse 10 wird von dem optischen Chip 1 Licht ausgesandt bzw. Licht empfangen. Die optische Achse 10 verläuft senkrecht zur Zeichenebene der Figur 1.

Die Referenzstruktur 2 ist an der optischen Einheit ausgebildet und dient, wie noch ausgeführt wird, unter anderem der Ankopplung von Strukturen, die der Befestigung eines Lichtwellenleiters an dem optischen Modul dienen und die eine genaue Justage eines solchen Lichtwellenleiters in Bezug auf den optischen Chip 1 ermöglichen.

Die Referenzgeometrie 2 besitzt eine symmetrische Form. Im dargestellten Ausführungsbeispiel ist die Referenzgeometrie 2 zylindrisch ausgebildet, so dass sie in der Schnittdarstellung und in der Vorderansicht kreisförmig ist. Es sei an dieser Stelle jedoch darauf hingewiesen, dass auch andere geometrische Formen möglich sind, beispielsweise eine N-eckige Form. Auch muss die Referenzgeometrie keine kontinuierliche geometrische Struktur aufweisen. Sie kann ebenso aus einzelnen Punkten oder Bereichen, beispielsweise aus drei oder vier Punkten bestehen, die miteinander nicht verbunden sind. Es ist aber von Bedeutung, dass die Referenzgeometrie eine innere Symmetrie aufweist, die eine erste Symmetrieachse 20 definiert.

In der Figur 1 fällt die Symmetrieachse 20 der Referenzstruktur 2 mit der optischen Achse 10 des optischen Chips 1 überein, da der optische Chip 1 genau in der Mitte der Referenzgeometrie angeordnet ist. Dies ist der Idealzustand, der praktisch jedoch nur selten zu erreichen ist. In der Regel wird der optische Chip 1 innerhalb eines Bereiches 31 der Referenzfläche 3 angeordnet sein. Dieser Bereich 31 gibt einen Versatzbereich an, in dem die optische Achse des Chips 1 nicht mit der geometrischen Achse der Referenzstruktur 2 übereinstimmt.

Die Figur 2 zeigt eine Anordnung, bei der innerhalb der Referenzstruktur 2 der Figur 1 zusätzlich eine längliche Hülse 4 mit einer inneren Bohrung bzw. Aussparung 43 angeordnet ist. Die Hülse 4 ist symmetrisch aufgebaut und die Bohrung 43 ist zentrisch in der Hülse 4 ausgebildet. Auch die Hülse 4 besitzt eine Symmetrieachse 40, die aufgrund der symmetrischen Anordnung der Hülse 4 in der Referenzgeometrie 2 zum einen mit der Symmetrieachse 20 der Referenzgeometrie 2 und zum anderen mit der optischen Achse 10 des optischen Chips übereinstimmt.

Auch die Figur 2 gibt den idealen, jedoch nicht realistischen Fall an, dass die Platzierung des optischen Chips 1 auf der Referenzfläche 3 derart gelingt, dass der optische Chip 1 gerade auf der Symmetrieachse der Referenzgeometrie der Referenzgeometrie 2 liegt.

Im Übrigen sei angemerkt, dass die Referenzgeometrie 2 beispielsweise durch einen zylindrischen Stutzen gebildet wird, in den die zylindrische Hülse eingeführt wird. Der Außendurchmesser der zylindrischen Hülse 4 entspricht dabei gerade dem Innendurchmesser des zylindrischen Stutzens 2, so dass die Hülse im Wesentlichen spielfrei in den Stutzen 2 einsetzbar ist. Das dem optischen Chip 1 abgewandte Ende der Hülse 4 dient der Aufnahme und Ankopplung eines Lichtwellenleiters, so dass die Hülse eine Ausrichtung zwischen dem optischen Chip 1 und einem anzukoppelnden Lichtwellenleiter bereitstellt.

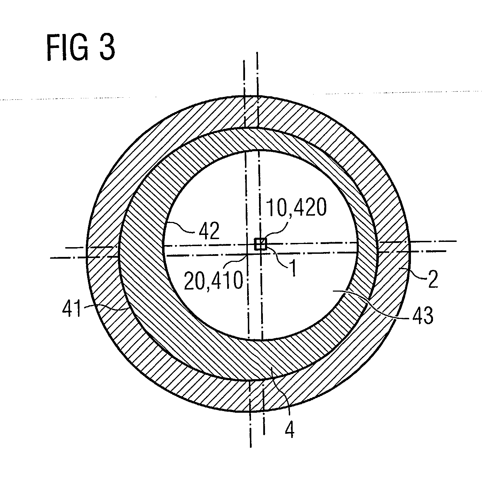

Die Figur 3 zeigt nun den in der Praxis realistischen Fall, dass der optische Chip 1 mit einem Versatz gegenüber der Referenzgeometrie 2 auf der Referenzfläche der optischen Einheit montiert ist. Dies bedeutet, dass die optische Achse 10 des optischen Chips 1 und die Symmetrieachse 20 der Referenzgeometrie 2 nicht mehr zusammenfallen, sondern vielmehr unter Vorliegen eines Versatzes parallel zueinander verlaufen.

Zum Ausgleich dieses Versatzes bei Ankopplung eines Lichtwellenleiters ist nun eine speziell ausgebildete Koppelstruktur vorgesehen. Hierzu wird eine Hülse 4 bereitgestellt, die eine exzentrische Bohrung bzw. Aussparung 43 aufweist. Die Wandung der Hülse 4 besitzt dabei eine Außenkontur 41 und eine Innenkontur 42, die zwischen sich eine Hülsenwandung mit vaiierender Dicke ausbilden. Die Innenkontur 42 der Hülse, d.h. die Innenwandung, die die zylindrische Bohrung 43 definiert, besitzt eine erste Symmetrieachse 420 der Hülse 4. Die erste Symmetrieachse verläuft dabei naturgemäß entlang der Mitte bzw. Achse der Bohrung 43. Dagegen definiert die Außenkontur 41, d.h. die Außenwandung der Hülse 4 eine weitere Symmetrieachse 410. Die beiden Achsen 420, 410 sind zueinander versetzt.

Es ist unmittelbar ersichtlich, dass die Symmetrieachse 410 der Außenwandung der Hülse 4 auf der Symmetrieachse 20 der Referenzgeometrie 2 liegt. Dies hängt damit zusammen, dass die Außenwandung 41 symmetrisch zur Referenzgeometrie verläuft.

Die Symmetrieachse 420 in Bezug auf die Innenwandung 42 bzw. der Bohrung 43 ist dagegen von der Symmetrieachse 20 der Referenzgeometrie versetzt. Es ist nun vorgesehen, eine Hülse 4 zu wählen, bei der der Versatz zwischen den beiden Symmetrieachsen 410, 420 der Hülse im wesentlichen gleich dem Versatz zwischen der optischen Achse 10 des optischen Chips 1 und der Symmetrieachse 20 der Referenzgeometrie 2 ist, und zwar sowohl hinsichtlich Betrag als auch (nach entsprechendem Drehen der Hülse) hinsichtlich Richtung. Hierdurch wird erreicht, dass die Symmetrieachse 420 der Bohrung 43 mit der optischen Achse 10 des optischen Chips übereinstimmt. Auf diese Weise ist eine in das dem optischen Chip 1 abgewandte Ende der Hülse 4 eingeführte Lichtleitfaser automatisch exakt gegenüber dem optischen Chip 1 justiert und positioniert, d.h. die ein- bzw. ausgekoppelte Leistung ist maximal. Dies wird dabei ohne das Erfordernis einer aktiven Justage erreicht.

Zur Ausrichtung einer optischen Faser in Bezug auf eine optische Einheit 1 werden folgende Verfahrensschritte durchlaufen.

Nachdem der optische Chip 1 auf der Referenzfläche 3 des optischen Moduls montiert ist, wird zunächst festgestellt, welchen Versatz der optische Chip 1 bzw. die optische Achse 10 des optischen Chips in Bezug auf die Symmetrieachse 20 der am optischen Modul vorgesehenen Referenzgeometrie 2 besitzt. Es wird also festgestellt, an welcher Stelle des Versatzfeldes 31 (Figur 1) der optische Chip 1 tatsächlich platziert wurde. Eine solche Bestimmung erfolgt bevorzugt mittels eines Bilderkennungsverfahrens. Beispielsweise werden die Referenzgeometrie und der optische Chip mittels einer Kamera erfasst und ihre Position mittels eines Mustererkennungssystems ermittelt. Das Mustererkennungssystem bestimmt den Versatz (Abweichung der Ist-Lage von der Soll-Lage) des optischen Chips 1 gegenüber der Referenzgeometrie 2. Der Versatz ist ein Vektor mit einer bestimmten Länge und einer bestimmten Richtung.

Nach Bestimmung des Versatzes wird nun aus einem Bausatz mit mehreren Hülsen mit exzentrischer Bohrung eine geeignete Hülse 4 ausgewählt, mittels der sich der Versatz kompensieren lässt.

Dabei wird eine Hülse 4 ausgewählt, bei der der Abstand zwischen den beiden in Bezug auf die Figur 3 erläuterten Symmetrieachsen 410, 420 gerade dem Betrag des Versatzvektors entspricht. Die Hülse wird in Bezug auf die Referenzgeometrie 2 an dem optischen Modul befestigt und dann in eine Position gedreht, in der auch die Richtung des Versatzes übereinstimmt. Das Endergebnis ist die in Figur 3 dargestellte Situation.

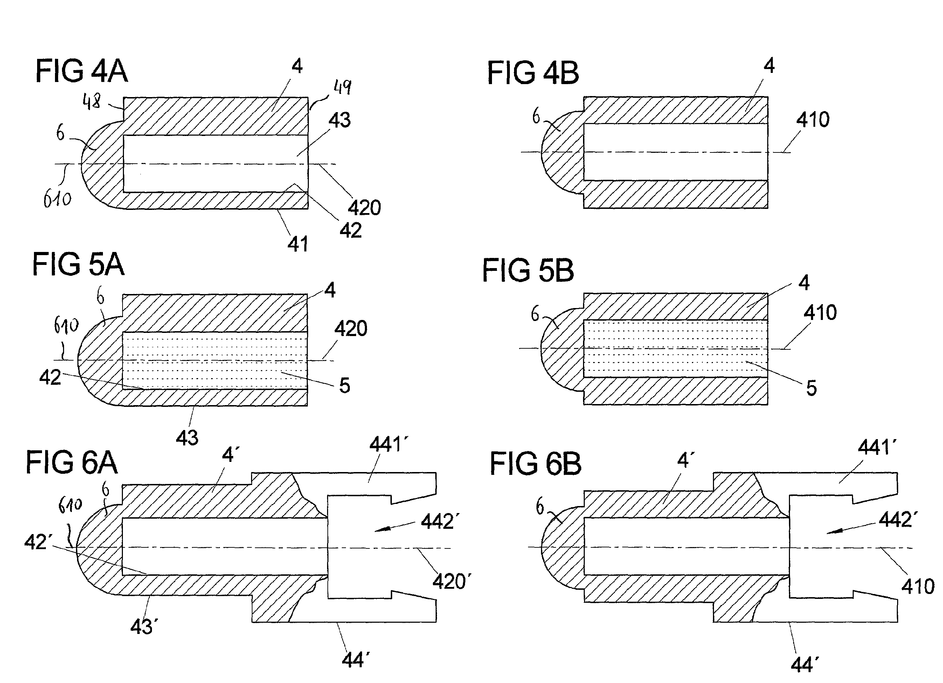

Die Figuren 4a, 5a und 6a zeigen mehrere Ausführungsbeispiele für Hülsen 4, 4', wie sie in einer Anordnung gemäß Figur 3 einsetzbar sind. Die Hülsen sind dabei in seitlicher Schnittansicht dargestellt. Die jeweils zugeordneten Figuren 4b, 5b und 6b zeigen die entsprechenden Hülsen mit einer symmetrischen Bohrung, d.h. ohne eine exzentrische Bohrung 43.

Die Figur 4a zeigt eine Hülse 4, bei der eine Bohrung 43 mit einer Symmetrieachse 420 exzentrisch in der Hülse 4 ausgebildet ist. Die Bohrung 43 dient als Faserführung. Auf der der optischen Einheit 1 zugewandten Seite 48 der Hülse 4 ist eine Koppellinse 6 ausgebildet. Die Bohrung 43 erstreckt sich von der anderen Seite 49 der Hülse bis zu der Koppellinse 6. Diese ist dabei auf der der optischen Einheit 1 zugewandten Seite 48 der Hülse 4 derart ausgebildet, das ihre optische Achse 610 mit der Symmetrieachse 420 der Bohrung 43 zusammenfällt. Der Linsenscheitel der Koppellinse 61 steht gegenüber der zugehörigen Seite 48 der Linse vor und erstreckt sich in Richtung der optischen Einheit.

Im dargestellten Ausführungsbeispiel ist die Koppellinse 6 einstückig an der Hülse 4 ausgebildet. Beispielsweise besteht die Einheit aus einem transparenten Kunststoffmaterial.

Die Figur 4b zeigt eine Hülse mit symmetrischer Bohrung und einer Symmetrieachse 410, die sich auf die Außenwandung der Hülse bezieht. Ebenfalls ist eine Koppellinse 6 dargestellt, deren Achse ebenfalls auf dem Symmetrieachse 410 liegt.

Die Hülse 4 kann grundsätzlich aus Kunstsoff, Metall oder Keramik bestehen. In den beiden letztgenannten Fällen ist die Koppellinse 6 allerdings als gesondertes Element gefertigt und an der einen Seite 48 des Koppelelements angeordnet. Eine Faser wird beispielsweise über eine Steckerschnittstelle (receptacle) direkt von einer Seite in die Öffnung 43 der Hülse 4 eingeführt. Derartige Kopplungen sind an sich bekannt, so dass auf sie nicht weiter eingegangen wird.

In der Figur 5a ist die Hülse entsprechend der Figur 4a ausgebildet. Es ist in der Bohrung 43 in diesem Fall jedoch ein sogenannter Faserstummel bzw. fiberstub 5 befestigt. Es ist somit ein Lichtwellenleiterabschnitt 5 fest in die Hülse 4 integriert, der als Koppelelement dient und zum einen über die Koppellinse 6 mit einem optoelektronischen Sende- und/oder Empfangsbauelement (Chip 1) und zum anderen mit einer anzukoppelnden Lichtleitfaser optisch gekoppelt wird. Die Ankopplung einer Lichtleitfaser an die eine Seite des Faserstummels 5 erfolgt in an sich bekannter Weise beispielsweise mittels eines Umgehäuses, in dem die einzelnen Komponenten angeordnet sind. Die Figur 5b zeigt eine Hülse 4 mit Koppellinse 6 und Faserstummel 5, die eine symmetrische Bohrung aufweist.

Gemäß der Ausgestaltung der Figur 6a bildet das eine Ende eine Hülse 4' ein Rastteil 44' aus, das Raststrukturen 441' und eine Aufnahmeöffnung 422' zur Ankopplung eines optischen Steckers aufweist. Durch Einführen eines optischen Steckers in die Öffnung 442' und eine entsprechende Verrastung kann ein optischer Stecker mit einer Lichtleitfaser mittels einer Schnappverbindung mit der Hülse 4' verbunden werden. Die Figur 6b zeigt wiederum eine Hülse 4' mit symmetrisch ausgebildeter Aussparung.

Es wird darauf hingewiesen, dass die Hülse 4, 4', wie in der Figur 3 dargestellt, bevorzugt über die Referenzgeometrie 2 am optischen Modul befestigt wird. Hierzu wird die Hülse 4 mit der Linse 6 an der Referenzgeometrie durch Kleben, Schweißen oder eine andere dauerhafte Verbindungsart befestigt und fixiert. Die Referenzgeometrie dient also der Befestigung der Hülse 4. Dies ist zwar vorteilhafterweise, jedoch nicht notwendigerweise der Fall. So kann die Referenzgeometrie auch allein zur Bestimmung eines Versatzes des optischen Chips 1 verwendet werden und eine Befestigung der Hülse 4 mit der Koppellinse 6 an dem optischen Modul auch über andere Befestigungsstrukturen erfolgen.

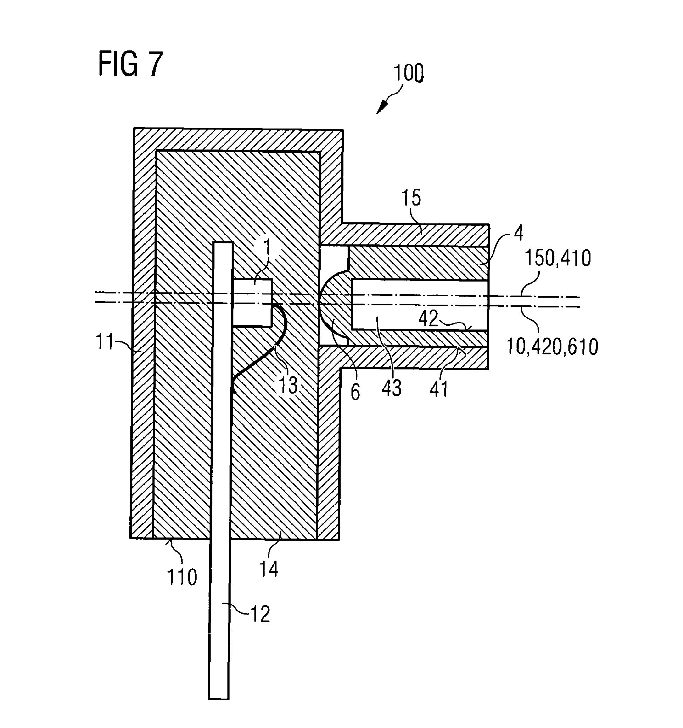

Die Figur 7 zeigt ein optisches Modul 100 mit einem mit einem transparenten Vergussmaterial 14 gefüllten Gehäuse 11, in dem durch eine untere Gehäuseöffnung 110 ein Leadframe 12 eingeführt ist. Auf dem Leadframe 12 befindet sich ein optischer Chip 1, der mittels eines Bonddrahtes 13 und einem weiteren, nicht dargestellten Kontakt elektrisch kontaktiert ist. Das Gehäuse 11 bildet des Weiteren als Referenzgeometrie einen Stutzen 15 aus, der der Ankopplung einer Lichtleitfaser dient. Der Stutzen weist eine Symmetrieachse 150 auf. Der optische Chip 1 weist eine optische Achse 10 auf, die idealerweise mit der Symmetrieachse 150 des Stutzen übereinstimmen würde. In der Realität und im dargestellten Ausführungsbeispiel ist dies jedoch nicht der Fall, so dass die Achsen 10, 150 zueinander versetzt sind.

Es ist nun in den Stutzen 15 eine Hülse 4 mit integrierter Koppellinse 6 gemäß der Figur 4a eingesetzt, wobei die Hülse 4 eine exzentrische Bohrung 43 aufweist. Die Symmetrieachse 420 der Bohrung 43 liegt dabei auf der optischen Achse 10 des optischen Chips 1 und fällt mit der optischen Achse der Koppellinse 6 zusammen. Die Symmetrieachse 410 der Außenwandung 41 der Hülse 4 liegt dagegen auf der Symmetrieachse 150 des Ankoppelstutzens 15. Letzteres ermöglicht den problemlosen Einsatz der Hülse 4 in den Ankoppelstutzen 15. Da die Symmetrieachse 420 der Bohrung 43 mit der optischen Achse 10 des optischen Chips übereinstimmt, kann eine Lichtleitfaser in idealer Koppelposition an der Hülse 4 und dem Koppelstutzen 15 befestigt werden. Durch die Koppellinse 6 wird dabei eine effektive Lichtkopplung bei minimalem Versatz ermöglicht.

## Patentansprüche

1. Anordnung zur optischen Kopplung eines Lichtwellenleiters mit einer optischen Einheit eines optischen Moduls, wobei die Anordnung ein optisches Modul mit einer optischen Einheit (1) und einer Referenzgeometrie (2, 15) zur mechanischen Ankopplung eines Koppelelementes (4) aufweist, wobei das Koppelelement (4) der Aufnahme bzw. Ankopplung eines mit der optischen Einheit (1) optisch zu koppelnden Lichtwellenleiters dient, und wobei die optische Einheit (1) eine optische Achse (10) aufweist, entlang derer Licht von der optischen Einheit (1) ausgesandt oder empfangen wird, die Referenzgeometrie (2, 15) genau eine erste Symmetrieachse (20, 150) definiert,
- die optische Achse (10) der optischen Einheit (1) und die Symmetrieachse (20, 150) der Referenzgeometrie (2, 15) einen Versatz zueinander aufweisen, und
- des weiteren ein Koppelelement (4) vorgesehen ist, wobei
- das Koppelelement (4) eine durch eine Innenfläche (42) begrenzte Bohrung (43) aufweist, wobei die Innenfläche (42) des Koppelelements (4) eine zweite Symmetrieachse (420) definiert, an der der optischen Einheit (1) zugewandten Seite des Koppelelements (4) ein strahlformendes Element (6) mit einer optischen Achse (610) in das Koppelelement (4) integriert ist, und
- die optische Achse (610) des strahlformenden Elements (6) mit der zweiten Symmetrieachse (420) zusammenfällt,
- das Koppelelement (4) derart in Bezug auf das optische Modul (100) angeordnet ist, dass die zweite Symmetrieachse (420) mit der optischen Achse (10) der optischen Einheit (1) zusammenfällt, und dabei
- die erste Symmetrieachse (20, 150) und die zweite Symmetrieachse (420) parallel zueinander verlaufen,
**dadurch gekennzeichnet, dass**
- die erste Symmetrieachse (20, 150) und die zweite Symmetrieachse (420) einen Versatz zueinander aufweisen, der hinsichtlich Richtung und Betrag im wesentlichen gleich dem Versatz zwischen der optischen Achse (10) der optischen Einheit (1) und der ersten Symmetrieachse (20, 150) der Referenzgeometrie (2,15) ist, und
- die Referenzgeometrie (2, 15) relativ zur optischen Einheit (1) unbeweglich angeordnet ist.

2. Anordnung nach Anspruch 1, **dadurch gekennzeichnet, dass** das strahlformende Element (6) einstückig mit dem Koppelelement (4) ausgebildet ist.

3. Anordnung nach Anspruch 1, **dadurch gekennzeichnet, dass** das strahlformende Element (6) ein gesondertes Teil darstellt, das mit dem Koppelelement (4) verbunden ist.

4. Anordnung nach mindestens einem der Ansprüche 1 bis 3, **dadurch gekennzeichnet, dass** das strahlformende Element (6) durch eine Linse gebildet ist.

5. Anordnung nach mindestens einem der vorangehenden Ansprüche, **dadurch gekennzeichnet, dass** das Koppelelement (4) eine Außenfläche (41) aufweist, die eine dritte Symmetrieachse (410) definiert, die von der zweiten Symmetrieachse abweicht, und das Koppelelement (4) derart in Bezug auf das optische Modul angeordnet ist, dass die dritte Symmetrieachse (410) auf der ersten Symmetrieachse (20, 150) der Referenzgeometrie (2, 15) liegt.

6. Anordnung nach mindestens einem der vorangehenden Ansprüche, **dadurch gekennzeichnet, dass** das Koppelelement (4) durch eine Hülse mit einer exzentrischen Bohrung (43) gebildet ist.

7. Anordnung nach Anspruch 6, **dadurch gekennzeichnet, dass** die exzentrischen Bohrung (43) sich von der einen Seite (49) der Hülse (4) bis zu dem strahlformenden Element (6) erstreckt.

8. Anordnung nach mindestens einem der vorangehenden Ansprüche, **dadurch gekennzeichnet, dass** die Hülse (4) mittels der Referenzgeometrie (2, 15) an dem optischen Modul befestigt ist.

9. Anordnung nach mindestens einem der vorangehenden Ansprüche, **dadurch gekennzeichnet, dass** das Koppelelement (4') an der der optischen Einheit (1) abgewandten Seite Raststrukturen (44') zur Ankopplung eines optischen Steckers mit einem Lichtwellenleiter aufweist.

10. Anordnung nach mindestens einem der vorangehenden Ansprüche, **dadurch gekennzeichnet, dass** die Referenzgeometrie (2, 15) im Querschnitt kreisförmig oder als N-Eck ausgebildet ist.

11. Anordnung nach einem der vorhergehenden Ansprüche, **dadurch gekennzeichnet, dass** das Koppelelement aufweist:
- eine erste Seite (48), die der optischen Kopplung mit der optischen Einheit (1) dient,
- eine zweite Seite (49), die der Aufnahme bzw. Ankopplung des mit der optischen Einheit (1) optisch zu koppelnden Lichtwellenleiters dient, wobei
- sich die durch die Innenfläche (42) begrenzte Bohrung (43) von der zweiten Seite (49) in Richtung der ersten Seite (48) erstreckt.

12. Anordnung nach einem der vorhergehenden Ansprüche, **dadurch gekennzeichnet, dass** die durch die Innenfläche (42) begrenzte Bohrung (43) sich von der zweiten Seite (49) des Koppelelements bis zu dem strahlformenden Element (6) erstreckt.

## Claims

1. Arrangement for optical coupling a light wave guide with an optical unit of an optical module, wherein the arrangement comprises
an optical module with an optical unit (1) and a reference geometry (2, 15) for mechanical coupling of a coupling element (4),
wherein
the coupling element (4) serves for accommodation and/or coupling of a light wave guide to be coupled to the optical unit (1), and wherein
the optical unit (1) comprises an optical axis (10), along which light from the optical unit (1) is transmitted or received,
the reference geometry (2, 15) defines exactly one first axis of symmetry (20, 150),
the optical axis (10) of the optical unit (1) and the axis of symmetry (20, 150) of the reference geometry (2, 15) comprise an offset with respect to each other, and
further a coupling element (4) is provided, wherein
the coupling element (4) comprises a hole (42) delimited by an inner surface (42), wherein
the inner surface (42) of the coupling element (4) defines a second axis of symmetry (420),
at the side of the coupling element (4) facing the optical unit (1) a beam forming element (6) with an optical axis (610) is integrated in the coupling element (4), and
the optical axis (610) of the beam forming element (6) coincides with the second axis of symmetry (420),
the coupling element (4) is arranged with respect to the optical module (100) such that the second axis of symmetry (420) coincides with the optical axis (10) of the optical unit (1), and thereby
the first axis of symmetry (20, 150) and the second axis of symmetry (420) are parallel to each other,
**characterized in that**
the first axis of symmetry (20, 150) and the second axis of symmetry (420) comprise an offset with respect to each other, which is with regard to a direction and an amount substantially equal to the offset between the optical axis (10) of the optical unit (1) and the first axis of symmetry (20, 150) of the reference geometry (2, 15), and
the reference geometry (2, 15) is arranged immovable relative to the optical unit (1).

2. Arrangement of claim 1, **characterized in that** the beam forming element (6) is formed unitary with the coupling element (4).

3. Arrangement of claim 1, **characterized in that** the beam forming element (6) represents a separated member which is connected to the coupling element (4).

4. Arrangement of at least one of the claims 1 to 3, **characterized in that** the beam forming element (6) is formed by a lens.

5. Arrangement of at least one of the preceding claims, **characterized in that** the coupling element (4) comprises an outer surface (41) which defines a third axis of symmetry (410) which deviates from the second axis of symmetry, and the coupling element (4) is arranged with respect to the optical module such that the third axis of symmetry (410) is located on the first axis of symmetry (20, 150) of the reference geometry (20, 150).

6. Arrangement of at least one of the preceding claims, **characterized in that** the coupling element (4) is formed by a sleeve with an eccentric hole (43).

7. Arrangement of claim 6, **characterized in that** the eccentric hole (43) extends from the one side (49) of the sleeve (4) to the beam forming element (6).

8. Arrangement of at least one of the preceding claims, **characterized in that** the sleeve (4) is attached to the optical module by the reference geometry (2, 15).

9. Arrangement of at least one of the preceding claims, **characterized in that** the coupling element (4') comprises engaging structures (44') at the side facing away from the optical unit (1) for coupling an optical plug with a light wave guide.

10. Arrangement of at least one of the preceding claims, **characterized in that** the reference geometry (2, 15) is formed circular or as polygon with n edges in the cross-section.

11. Arrangement of one of the preceding claims, **characterized in that** the coupling element comprises:
- a first side (48) serving for the optical coupling with the optical unit (1),
- a second side (49) serving for the accommodation and/or the coupling of the light wave guide to be optically coupled to the optical unit (1), wherein
the hole (43) delimited by the inner surface (42) extends from the second side (49) in a direction of the first side (48).

12. Arrangement of one of the preceding claims, **characterized in that** the hole (43) delimited by the inner surface (42) extends from second side (49) of the coupling element to the beam forming element (6).

## Revendications

1. Ensemble de couplage optique d'un conducteur d'onde lumineuse avec une unité optique d'un module optique,
l'ensemble présentant un module optique doté d'une unité optique (1) et d'une géométrie de référence (2, 15) qui permet l'accouplement mécanique d'un élément d'accouplement (4),
l'élément d'accouplement (4) servant à reprendre ou à accoupler à l'unité optique (1) un conducteur d'onde lumineuse qui doit être accouplé optiquement,
l'unité optique (1) présentant un axe optique (10) le long duquel la lumière est émise ou reçue par l'unité optique (1),
la géométrie de référence (2, 15) définissant avec précision un premier axe de symétrie (20, 150),
l'axe optique (10) de l'unité optique (1) et l'axe de symétrie (20, 150) de la géométrie de référence (2, 15) présentant un décalage mutuel,
un élément d'accouplement (4) étant en outre prévu, l'élément d'accouplement (4) présentant un alésage (43) délimité par une surface intérieure (42), la surface intérieure (42) de l'élément d'accouplement (4) définissant un deuxième axe de symétrie (420),
un élément (6) de formation de faisceau doté d'un axe optique (610) étant intégré dans l'élément d'accouplement (4) sur le côté de l'élément d'accouplement (4) tourné vers l'unité optique (1) et
l'axe optique (610) de l'élément (6) de formation de faisceau coïncidant avec le deuxième axe de symétrie (420),
l'élément d'accouplement (4) étant disposé par rapport au module optique (100) de telle sorte que le deuxième axe de symétrie (420) coïncide avec l'axe optique (10) de l'unité optique (1) et
le premier axe de symétrie (20, 150) et le deuxième axe de symétrie (420) étant parallèles l'un à l'autre,
**caractérisé en ce que**
le premier axe de symétrie (20, 150) et le deuxième axe de symétrie (420) présentent un décalage mutuel dont la direction et le niveau sont essentiellement identiques à ceux du décalage entre l'axe optique (10) de l'unité optique (1) et le premier axe de symétrie (20, 150) de la géométrie de référence (2, 15) et
**en ce que** la géométrie de référence (2, 15) est immobile par rapport à l'unité optique (1).

2. Ensemble selon la revendication 1, **caractérisé en ce que** l'élément (6) de formation de faisceau est formé d'un seul tenant avec l'élément d'accouplement (4).

3. Ensemble selon la revendication 1, **caractérisé en ce que** l'élément (6) de formation de faisceau constitue une pièce séparée raccordée à l'élément d'accouplement (4).

4. Ensemble selon au moins l'une des revendications 1 à 3, **caractérisé en ce que** l'élément (6) de formation de faisceau est formé par une lentille.

5. Ensemble selon au moins l'une des revendications précédentes, **caractérisé en ce que** l'élément d'accouplement (4) présente une surface extérieure (41) qui définit un troisième axe de symétrie (410) différent du deuxième axe de symétrie et **en ce que** l'élément d'accouplement (4) est disposé par rapport au module optique de telle sorte que troisième axe de symétrie (410) est situé sur le premier axe de symétrie (20, 150) de la géométrie de référence (2, 15).

6. Ensemble selon au moins l'une des revendications précédentes, **caractérisé en ce que** l'élément d'accouplement (4) est formé par une douille dotée d'un alésage décentré (43).

7. Ensemble selon la revendication 6, **caractérisé en ce que** l'alésage décentré (43) s'étend entre un côté (49) de la douille (4) jusqu'à l'élément (6) de formation de faisceau.

8. Ensemble selon au moins l'une des revendications précédentes, **caractérisé en ce que** la douille (4) est fixée sur le module optique au moyen de la géométrie de référence (2, 15).

9. Ensemble selon au moins l'une des revendications précédentes, **caractérisé en ce que** l'élément d'accouplement (4') présente sur son côté non tourné vers l'unité optique (1) des premières structures d'encliquetage (44') qui permettent d'accoupler une fiche optique à un conducteur d'onde lumineuse.

10. Ensemble selon au moins l'une des revendications précédentes, **caractérisé en ce que** la géométrie de référence (2, 15) présente en section transversale la forme d'un cercle ou d'un polygone à n côtés.

11. Ensemble selon l'une des revendications précédentes, **caractérisé en ce que** l'élément d'accouplement présente :
un premier côté (48) qui sert à l'accouplement optique avec l'unité optique (1),
un deuxième côté (49) qui sert à reprendre ou accoupler le conducteur d'onde lumineuse qui doit être accouplé optiquement à l'unité optique (1),
un alésage (43) délimité par la surface intérieure (42) s'étendant depuis le deuxième côté (49) en direction du premier côté (48).

12. Ensemble selon l'une des revendications précédentes, **caractérisé en ce que** l'alésage (43) délimité par la surface intérieure (42) s'étend depuis le deuxième côté (49) de l'élément d'accouplement jusqu'à l'élément (6) de formation de faisceau.
